# FASCICULE DE BREVET EUROPEEN

(11) **EP 2 522 555 B1**
(45) Date de publication et mention de la délivrance du brevet: **15.07.2015**
(21) Numéro de dépôt: 12164366.2
(22) Date de dépôt: 17.04.2012
(51) Int. Cl.: B60S 1/34

(54) **Capuchon pour entraîneur**
Trainerkappe
Cap for driver

(30) Priorité: 10.05.2011 FR 1154003
(43) Date de publication de la demande: 14.11.2012
(73) Titulaire: Valeo Systèmes d'Essuyage, 78321 Le Mesnil Saint Denis (FR)
(72) Inventeur: Rollet, Sébastien, 63260 Aigueperse (FR); Roussel, Loic, 63270 Isserteaux (FR); Vincent, Sébastien, 63800 Cournon (FR)
(74) Mandataire: Callu Danseux, Violaine

(56) Documents cités:
- EP-A1- 0 628 457
- DE-A1-102008 034 373
- GB-A- 1 305 078
- US-A1- 2002 144 373
- US-A1- 2002 152 575

## Description

L'invention concerne notamment un capuchon pour entraîneur, notamment pour une tête d'entraîneur, cet entraîneur étant agencé pour coopérer avec un arbre d'un moteur de balai d'essuie-glace.

Dans le domaine des moteurs de balai d'essuie-glace, il est connu de recouvrir une tête d'un entraîneur avec un capuchon. Ce capuchon comporte par exemple, directement sur son enveloppe, une saillie coopérant avec la tête de l'entraîneur pour solidariser ce capuchon à l'entraîneur.

Ce capuchon présente en général une forme et des dimensions extérieures qui sont imposées, notamment par la réglementation et par des contraintes de style.

Dans certains cas, il peut être demandé d'adapter sur une tête d'entraîneur un nouveau capuchon de forme et/ou de dimensions différentes d'un capuchon existant auquel la tête d'entraîneur était destinée.

L'invention propose notamment une solution permettant d'adapter ce nouveau capuchon à une tête d'entraîneur existante.

L'invention a ainsi pour objet un capuchon pour entraîneur, notamment pour une tête d'entraîneur, cet entraîneur étant agencé pour coopérer avec un arbre d'un moteur de balai d'essuie-glace, ce capuchon comportant :
- une coque définissant un volume intérieur,
- au moins une patte d'encliquetage flexible agencée pour coopérer avec un élément d'encliquetage complémentaire sur l'entraîneur, cette patte d'encliquetage s'étendant au moins partiellement, notamment totalement, dans le volume intérieur de la coque.

L'invention permet d'utiliser, sur un entraîneur existant, un capuchon de formes variées et/ou de dimensions plus importantes, notamment plus long, grâce à la présence de la patte d'encliquetage, non plus sur l'enveloppe de la coque, mais dans l'espace intérieur de celle-ci.

Ainsi une même tête d'entraîneur peut être adaptée pour recevoir différents types de capuchon.

Le capuchon peut comprendre au moins une surface intérieure et une cloison intérieure, cette cloison étant notamment généralement plane et se raccordant sur cette surface intérieure de la coque, et ladite au moins une patte d'encliquetage est formée sur cette cloison intérieure.

De préférence, la patte d'encliquetage est formée sensiblement au milieu de cette cloison.

Avantageusement la coque présente une forme allongée suivant un axe longitudinal et la cloison s'étend de manière sensiblement perpendiculaire à cette direction longitudinale de la coque.

Si on le souhaite, la coque présente un fond et un rebord opposé à ce fond, et la cloison s'étend depuis ce fond jusqu'au rebord.

Le cas échéant, le capuchon comporte au moins une nervure de renfort notamment se raccordant à la surface intérieure de la coque.

Dans un exemple de mise en oeuvre de l'invention, cette nervure s'étend entre la surface intérieure de la coque et ladite cloison intérieure.

Le cas échéant, cette nervure comporte au moins deux branches, rectilignes ou courbes, se raccordant à une branche commune, elle-même rectiligne ou courbe.

Avantageusement cette nervure présente une forme en Y.

Avantageusement encore, la patte d'encliquetage est agencée pour pouvoir se déplacer, notamment en fléchissant, entre les deux branches de la nervure, par exemple entre les deux branches du Y.

Dans un exemple de mise en oeuvre de l'invention, la coque, notamment le capuchon, est réalisée d'un seul tenant, notamment en matière plastique, notamment par moulage.

Le cas échéant, le capuchon est agencé pour pouvoir être monté de manière pivotante sur l'entraîneur.

L'invention a encore pour objet un ensemble comportant un capuchon tel que décrit ci-dessus, et un entraîneur sur lequel est monté, notamment de manière pivotante, ce capuchon

L'invention pourra être mieux comprise à la lecture de la description détaillée qui va suivre, d'un exemple de mise en oeuvre non limitatif de l'invention, et à l'examen du dessin annexé, sur lequel :
- la figure 1 représente, schématiquement et partiellement, en perspective, un entraîneur et un capuchon selon un exemple de l'invention, et
- la figure 2 représente, schématiquement et partiellement, en perspective, le capuchon de la figure 1.

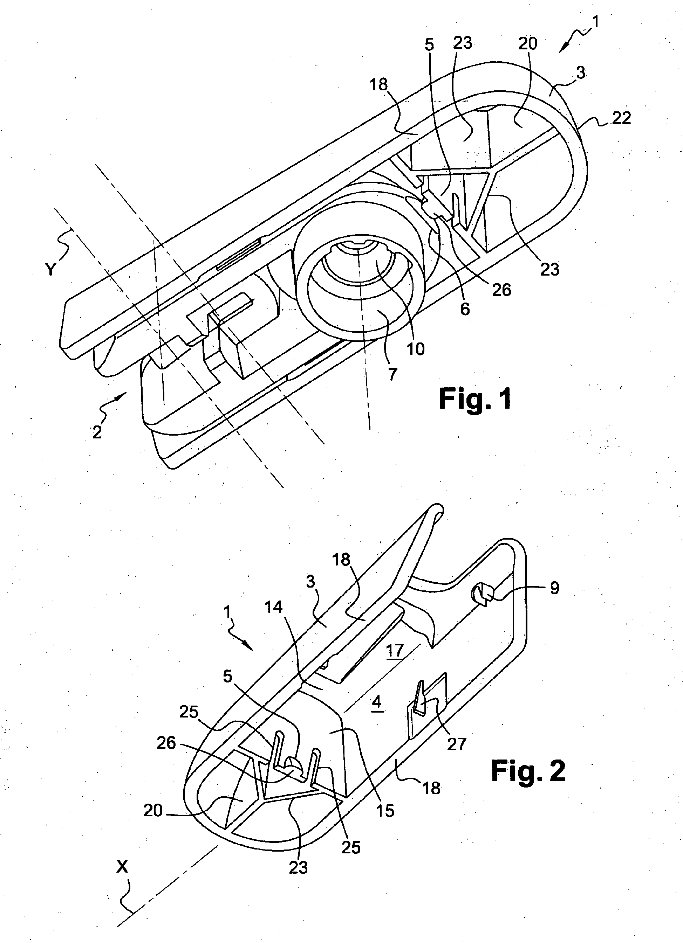

On a représenté sur les figures 1 et 2 un capuchon 1 pour une tête 2 d'entraîneur, cet entraîneur 2 étant agencé pour coopérer avec un arbre d'un moteur de balai d'essuie-glace, non représenté, ce capuchon 1 comportant :
- une coque 3 définissant un volume intérieur 4,
- une patte d'encliquetage flexible 5 agencée pour coopérer avec un élément d'encliquetage complémentaire 6 sur l'entraîneur 2, cette patte d'encliquetage 5 s'étendant totalement dans le volume intérieur 4 de la coque 3.

La tête d'entraîneur 2 comprend un logement cylindrique 7 pour recevoir une portion de l'arbre d'un moteur, non représenté.

Cette tête 2 comporte également, à l'arrière, des picots latéraux, non visibles, agencés pour coopérer avec des berceaux 9 sur la coque 3 pour assurer une liaison pivotante entre la coque 3 et cette tête 2, autour d'un axe Y.

L'élément d'encliquetage complémentaire 6 correspond à une encoche formée à l'avant de la tête 2.

Une bague métallique 10 peut être prévue dans le logement 7.

Le capuchon 1 comprend une surface intérieure 14 et une cloison intérieure 15, cette cloison 15 étant généralement plane et se raccordant sur cette surface intérieure 14 de la coque 3, et la patte d'encliquetage 5 est formée sur cette cloison intérieure 15.

La patte d'encliquetage 5 est formée sensiblement au milieu de cette cloison 15.

Dans l'exemple décrit, la coque 3 présente une forme allongée suivant un axe longitudinal X (parallèle à l'axe Y) et la cloison 15 s'étend de manière sensiblement perpendiculaire à cette direction longitudinale X de la coque 3.

La coque 3 présente un fond 17 et un rebord 18 opposé à ce fond, et la cloison 15 s'étend depuis ce fond 17 jusqu'au rebord 18.

Le capuchon 1 comporte en outre une nervure de renfort 20 se raccordant à la surface intérieure 14 de la coque 3.

Cette nervure 20 s'étend entre la surface intérieure 14 de la coque, depuis une extrémité 22 de celle-ci, et ladite cloison intérieure 15.

Cette nervure 20 présente une forme en Y.

La patte d'encliquetage 5 est agencée pour pouvoir se déplacer, lors de sa déformation élastique, entre les deux branches 23 du Y.

Cette patte 5 est bordée de part et d'autre par des fentes parallèles 25, et comporte, à son extrémité libre, une saillie 26 qui vient s'appuyer sur l'encoche 6 de la tête 2 lorsque celle-ci est bloquée sur le capuchon 1.

La surface intérieure 14 de la coque 3 est pourvue de saillies 27 pour coopérer par friction avec la tête 2.

Le capuchon 1 est réalisé d'un seul tenant, notamment en matière plastique, notamment par moulage.

## Revendications

1. Capuchon (1) pour entraîneur, notamment pour une tête d'entraîneur (2), cet entraîneur étant agencé pour coopérer avec un arbre d'un moteur de balai d'essuie-glace, ce capuchon comportant :
- une coque (3) définissant un volume intérieur et une surface intérieure (14),
- au moins une cloison intérieure (15), cette cloison étant notamment généralement plane et se raccordant sur cette surface intérieure de la coque,
- au moins une patte d'encliquetage flexible (5) agencée pour coopérer avec un élément d'encliquetage complémentaire sur l'entraîneur, cette patte d'encliquetage s'étendant au moins partiellement, notamment totalement, dans le volume intérieur dé la coque et est formée sur la cloison intérieure.

2. Capuchon selon l'une des revendications précédentes, **caractérisé par le fait que** la patte d'encliquetage (5) est formée sensiblement au milieu de cette cloison.

3. Capuchon selon l'une des revendications précédentes, **caractérisé par le fait que** la coque présente une forme allongée suivant un axe longitudinal (X) et la cloison (15) s'étend de manière sensiblement perpendiculaire à cette direction longitudinale de la coque.

4. Capuchon selon l'une des revendications précédentes, **caractérisé par le fait que** la coque présente un fond (17) et un rebord (18) opposé à ce fond, et la cloison s'étend depuis ce fond jusqu'au rebord.

5. Capuchon selon l'une des revendications précédentes, **caractérisé par le fait que** le capuchon comporte au moins une nervure de renfort (20) notamment se raccordant à la surface intérieure de la coque.

6. Capuchon selon l'une des revendications précédentes, **caractérisé par le fait que** cette nervure (20) s'étend entre la surface intérieure de la coque et ladite cloison intérieure.

7. Capuchon selon l'une des revendications précédentes, **caractérisé par le fait que** cette nervure (20) comporte au moins deux branches se raccordant à une branche commune.

8. Capuchon selon l'une des revendications précédentes, **caractérisé par le fait que** la nervure présente une forme en Y.

9. Capuchon selon la revendication précédente, **caractérisé par le fait que** la patte d'encliquetage est agencée pour pouvoir se déplacer entre les deux branches (23) du Y.

10. Capuchon selon l'une des revendications précédentes, **caractérisé par le fait que** la coque, notamment le capuchon, est réalisée d'un seul tenant, notamment en matière plastique, notamment par moulage.

11. Capuchon selon l'une des revendications précédentes, **caractérisé par le fait que** le capuchon est agencé pour pouvoir être monté de manière pivotante sur l'entraîneur.

12. Ensemble comportant un capuchon selon l'une des revendications précédentes est un entraîneur sur lequel est monté, notamment de manière pivotante, ce capuchon.

## Patentansprüche

1. Trainerkappe (1), insbesondere für einen Trainerkopf (2), wobei dieser Trainer derart angeordnet ist, dass er mit einer Welle eines Scheibenwischermotors zusammenwirkt, wobei diese Kappe umfasst:
- eine Schale (3), die ein Innenvolumen und eine Innenfläche (14) definiert,
- mindestens eine innere Trennwand (15), wobei diese Trennwand insbesondere im Allgemeinen plan ist und sich an diese Innenfläche der Schale anschließt,
- mindestens ein flexibles Rastteil (5), das derart vorgesehen ist, dass es in ein komplementäres Rastelement auf dem Trainer eingreift, wobei sich dieses Rastteil zumindest teilweise, insbesondere zur Gänze, in dem Innenvolumen der Schale erstreckt und auf der inneren Trennwand ausgebildet ist.

2. Kappe nach einem der vorhergehenden Ansprüche, **dadurch gekennzeichnet, dass** das Rastteil (5) im Wesentlichen in der Mitte dieser Trennwand ausgebildet ist.

3. Kappe nach einem der vorhergehenden Ansprüche, **dadurch gekennzeichnet, dass** die Schale eine längliche Form entlang einer Längsachse (X) aufweist, und sich die Trennwand (15) im Wesentlichen senkrecht auf diese Längsrichtung der Schale erstreckt.

4. Kappe nach einem der vorhergehenden Ansprüche, **dadurch gekennzeichnet, dass** die Schale einen Boden (17) und einen diesem Boden gegenüberliegenden Rand (18) umfasst, und sich die Trennwand von diesem Boden bis zum Rand erstreckt.

5. Kappe nach einem der vorhergehenden Ansprüche, **dadurch gekennzeichnet, dass** die Kappe mindestens eine Verstärkungsrippe (20) umfasst, die sich insbesondere an die Innenfläche der Schale anschließt.

6. Kappe nach einem der vorhergehenden Ansprüche, **dadurch gekennzeichnet, dass** sich diese Rippe (20) zwischen der Innenfläche der Schale und der inneren Trennwand erstreckt.

7. Kappe nach einem der vorhergehenden Ansprüche, **dadurch gekennzeichnet, dass** diese Rippe (20) mindestens zwei Schenkel umfasst, die sich an einen gemeinsamen Schenkel anschließen.

8. Kappe nach einem der vorhergehenden Ansprüche, **dadurch gekennzeichnet, dass** die Rippe eine Y-Form aufweist.

9. Kappe nach dem vorhergehenden Anspruch, **dadurch gekennzeichnet, dass** das Rastteil derart vorgesehen ist, dass es sich zwischen den beiden Schenkeln (23) des Y verschieben kann.

10. Kappe nach einem der vorhergehenden Ansprüche, **dadurch gekennzeichnet, dass** die Schale, insbesondere die Kappe, aus einem Stück, insbesondere aus Kunststoff, insbesondere durch Formguss hergestellt ist.

11. Kappe nach einem der vorhergehenden Ansprüche, **dadurch gekennzeichnet, dass** die Kappe derart vorgesehen ist, dass sie schwenkbar auf dem Trainer montiert werden kann.

12. Einheit, umfassend eine Kappe nach einem der vorhergehenden Ansprüche und einen Trainer, auf dem diese Kappe insbesondere schwenkbar montiert ist.

## Claims

1. Cap (1) for a driver, in particular for a driver head (2), this driver being arranged so as to cooperate with a shaft of a windscreen wiper motor, this cap comprising:
- a shell (3) defining an internal volume and an internal surface (14),
- at least one internal partition (15), this partition being in particular generally planar and connecting to this internal surface of the shell,
- at least one flexible snap-fitting tab (5) arranged so as to cooperate with a complementary snap-fitting element on the driver, this snap-fitting tab extending at least partially, in particular fully, into the internal volume of the shell and is formed on the internal partition.

2. Cap according to the preceding claim, **characterized in that** the snap-fitting tab (5) is formed essentially in the middle of this partition.

3. Cap according to either of the preceding claims, **characterized in that** the shell is elongate along a longitudinal axis (X) and the partition (15) extends essentially perpendicular to this longitudinal direction of the shell.

4. Cap according to one of the preceding claims, **characterized in that** the shell has a bottom (17) and a rim (18) opposite this bottom, and the partition extends from this bottom as far as the rim.

5. Cap according to one of the preceding claims, **characterized in that** the cap comprises at least one reinforcing rib (20), in particular connecting to the internal surface of the shell.

6. Cap according to one of the preceding claims, **characterized in that** this rib (20) extends between the internal surface of the shell and said internal partition.

7. Cap according to one of the preceding claims, **characterized in that** this rib (20) comprises at least two branches connecting to a common branch.

8. Cap according to one of the preceding claims, **characterized in that** the rib is in the shape of a Y.

9. Cap according to the preceding claim, **characterized in that** the snap-fitting tab is arranged such that it can move between the two branches (23) of the Y.

10. Cap according to one of the preceding claims, **characterized in that** the shell, in particular the cap is created in one piece, in particular in a plastic material, in particular by moulding.

11. Cap according to one of the preceding claims, **characterized in that** the cap is arranged such that it can be mounted in a pivoting manner on the driver.

12. Assembly comprising a cap according to one of the preceding claims and a driver on which is mounted - in particular in a pivoting manner - this cap.
